# EUROPÄISCHE PATENTSCHRIFT

(11) **EP 2 520 907 B1**
(45) Veröffentlichungstag und Bekanntmachung des Hinweises auf die Patenterteilung: **20.12.2017**
(21) Anmeldenummer: 11164771.5
(22) Anmeldetag: 04.05.2011
(51) Int. Cl.: G01F 13/00, G01G 13/02

(54) **Dosiervorrichtung für fliessfähige Substanzen**
Metering device for flowing substances
Dispositif de dosage pour substances pouvant s'écouler

(43) Veröffentlichungstag der Anmeldung: 07.11.2012
(73) Patentinhaber: Mettler-Toledo GmbH, 8606 Greifensee (CH)
(72) Erfinder: Lüchinger, Paul, 8610 Uster (CH); Ehrbar, Sandra, 8605 Gutenswil (CH)
(74) Vertreter: Mettler-Toledo

(56) Entgegenhaltungen:
- EP-A1- 2 072 974
- WO-A1-01/33176

## Beschreibung

Die vorliegende Erfindung bezieht sich auf eine Dosiervorrichtung für pulverförmiges Dosiergut, insbesondere auf eine Dosiervorrichtung, welche eine zur Auflockerung des in einer Dosiereinheit enthaltenen Dosierguts geeignete Aufnahmevorrichtung aufweist.

Dosiervorrichtungen für pulverförmiges Dosiergut finden insbesondere beim Dosieren kleiner Mengen mit hoher Präzision in kleine Zielgefässe Verwendung. Häufig sind solche Zielgefässe auf einer Waage platziert, um die Menge des aus der Dosiervorrichtung ausgetragenen Dosierguts zu verwiegen, so dass es anschliessend bestimmungsgemäss weiter verarbeitet werden kann.

Das zu dosierende Dosiergut befindet sich beispielsweise in einer Dosiereinheit, welche ein Entnahmegefäss und einen Dosierkopf aufweist. Dabei ist es wünschenswert, das zu dosierende Dosiergut durch eine kleine Austragungsöffnung der Dosiereinheit auszutragen, so dass sie auch gezielt in ein Gefäss mit einem kleinen Öffnungsquerschnitt abgefüllt werden kann.

Idealerweise fliesst pulverförmige Dosiergut gleichmässig durch die Schwerkraft getrieben in einem Strom aus einer kleinen Austragungsöffnung heraus, vergleichbar mit dem fliessenden Sand in einer Sanduhr. In diesem idealen Fall könnte der Massenstrom des Dosierguts einfach gesteuert werden, indem man den Querschnitt der Austragungsöffnung mit einer passenden Blendenverschlussvorrichtung verändert würde. Die meisten in der Praxis verwendeten Materialien verhalten sich leider nicht ideal. Viele im abzufüllenden pulverförmigen Dosiergut enthaltene Partikel weisen kein ideales Fliessverhalten auf. Während des Dosiervorgangs wird oft ein Zusammenklumpen von Partikeln beobachtet, das ein Verstopfen der Dosiereinheit zur Folge hat. Nur durch mechanisches Eingreifen kann die Verstopfung beseitigt werden und mit dem Füllvorgang fortgefahren werden.

Manche Pulver sind zudem derart komprimierbar, so dass sich im Dosiergut Klumpen aus gepresstem Pulver bilden, welche die Austragungsöffnung teilweise oder vollständig verstopfen können. Als typisches Beispiel weist Maisstärke eine hohe Tendenz zum Aneinanderhaften der Partikel auf. Zudem ist die Maisstärke stark komprimierbar. Aufgrund dieser Eigenschaften wird Maisstärke häufig als Testmaterial verwendet, um die Leistungsfähigkeit von Dosiervorrichtungen auszutesten. Die Probleme die das Aneinanderhaften und die Komprimierbarkeit eines Dosierguts verursacht, auch unter dem Begriff "Klebrigkeit" eines Dosierguts bekannt, führten zu zahlreichen Lösungsvorschlägen und Ausführungen von Dosiervorrichtungen beziehungsweise von deren Dosierköpfen. Beispielsweise existieren Dosierköpfe mit Förderschnecken, um das klebrige Dosiergut vom Entnahmegefäss zur Austragungsöffnung des Dosierkopfs zu fördern. Ferner sind Rührwerke und Schabvorrichtungen bekannt, die das Dosiergut von den Innenwänden des Entnahmegefässes und Dosierkopfs kratzen und zur Dosieröffnung hin treiben. Die Rührwerke dienen ferner dazu, die sogenannte Brückenbildung des Dosiergutes im Entnahmegefäss zu verhindern. Anstelle eines Rührwerks oder in Kombination mit demselben sind im Stand der Technik auch klopfende und vibrierende Vorrichtungen bekannt.

Ein möglicher Vorschlag zur Lösung der vorangehend aufgeführten Probleme wird in der US 2006/0011653 A1 offenbart. Eine Dosiervorrichtung zur Dosierung von pulverförmigem Dosiergut im Bereich von wenigen Milligramm bis zu einigen Gramm mit einer Zielgewichtgenauigkeit von weniger als +/- 5% des Zielgewichtes weist eine Dosiereinheit auf, welche im Wesentlichen ein Entnahmegefäss und einen Dosierkopf beinhaltet. Die Innenwand des Dosierkopfs ist von der Verbindungsstelle mit dem Entnahmegefäss gegen eine Austragungsöffnung hin konisch ausgebildet. Im Betriebszustand befindet sich die Austragungsöffnung an der Unterseite der Dosiereinheit und somit unterhalb des Entnahmegefässes. Im Betriebszustand fliesst freifliessendes Dosiergut innerhalb der Dosiereinheit unter Einwirkung der Schwerkraft zur Austragungsöffnung hin. Die Austragungsöffnung ist mit einem Blendenverschlussventil versehen, welcher zur Regulierung des austretenden Massenstroms des Dosiergutes dient. Die Dosiervorrichtung weist Mittel zum Vibrieren und/oder Klopfen des Behälters auf und kann zudem ein Rührwerk aufweisen, welches entlang seiner Drehachse zusätzlich linear auf und ab bewegt werden kann.

In Tests mit Maisstärke zeigte sich, dass dessen Austragung aus verschieden ausgestalteten Dosiereinheiten erhebliche Schwierigkeiten verursacht. Die Fliessfähigkeit eines solchen Dosierguts ist direkt davon abhängig wie locker dessen Aufschüttung, auch bekannt als Schüttgutdichte, ist. In einigen Versuchen konnte es sich ergeben, dass das Dosiergut durch den Einsatz eines Rührwerks und/oder den Einsatz von Mitteln zum Vibrieren verdichtet anstatt aufgelockert wurde. Das Resultat war, dass trotz vollständig geöffneter Austragungsöffnung kein Dosiergut aus der Dosiereinheit ausgetragen werden konnte.

EP 1959 244 A1 offenbart eine Lösung zu diesem Problem. Die dort offenbarte Dosiervorrichtung weist eine Haltevorrichtung und mindestens eine Aufnahmevorrichtung auf. In diese Aufnahmevorrichtung ist mindestens eine Dosiereinheit einsetzbar beziehungsweise aus dieser Aufnahmevorrichtung entfernbar. Ferner weist die Dosiervorrichtung mindestens einen auf die Aufnahmevorrichtung einwirkenden Aktuator auf. Die Aufnahmevorrichtung ist an der Haltevorrichtung schwenkbar gelagert. Durch den Aktuator sind oszillierende Schwenkbewegungen der Aufnahmevorrichtung erzeugbar. Der Aktuator wirkt dabei mit einer kurzen Abfolge mehrerer Schläge auf die Aufnahmevorrichtung ein. Die Aufnahmevorrichtung beginnt unter der Einwirkung der Schläge zu pendeln. Die Schwingfrequenz der Aufnahmevorrichtung ist vorzugsweise in Dissonanz zur Schlagfrequenz des Aktuators. Dies führt dazu, dass die durch die Schläge erzeugten Schockwellen oder mechanischen Pulse unterschiedliche Richtungen aufweisen. Dadurch wird dem Verklumpen des Dosierguts entgegengewirkt. Trotzdem kann es vereinzelt je nach Anwendung zum Verklumpen des Dosierguts zu kommen. Aus dem Stand der Technik sind bewegliche Teile, beispielsweise Rührwerke oder Schaber, bekannt, die in der Dosiereinheit angebracht sind und dem Verstopfen des Dosierguts entgegenwirken. Diese beweglichen Teile erfordern eine komplexe Mechanik und sind verschleissanfällig. Ausserdem kann vor allem empfindliches Dosiergut durch die zusätzlichen beweglichen Teile beschädigt werden.

In EP2072974 A1 wird eine Dosiervorrichtung offenbart, bei der ein Teil der Dosiereinheit auf einer beweglichen Aufnahmeeinheit platziert wird. Durch Bewegung der Aufnahmeeinheit kann das Dosiergut gelockert werden und einem Verstopfen entgegengewirkt werden. Diese Anordnung erfordert einen komplexen Antriebsmechanismus der Aufnahmeeinheit.

Bei der in Wo 01/33176 A1 offenbarten Dosiervorrichtung kann die Dosiereinheit ebenfalls auf einer Aufnahmeeinheit platziert werden. Mittels zweier Aktuatoren kann die Aufnahmevorrichtung verschwenkt und verschoben werden.

Nachteilig bei diesen Ausführungsformen ist, dass der Antriebsmechanismus komplex ist und ein grosses Volumen benötigt.

Aufgabe der vorliegenden Erfindung ist daher, eine Dosiervorrichtung zu schaffen, die es ermöglicht, das in der Dosiereinheit befindliche Dosiergut vor dem Dosiervorgang und für den Dosiervorgang zu konditionieren, insbesondere aufzulockern und somit dem Verstopfen der Dosiereinheit entgegenzuwirken ohne dass im Innern der Dosiereinheit bewegliche Teile vorhanden sind und gleichzeitig einen einfachen und kompakten Antriebsmechanismus aufweist. Diese Aufgabe wird mit einer Dosiervorrichtung gelöst, welche die im unabhängigen Patentanspruch angegebenen Merkmale aufweist.

Die erfindungsgemässe Dosiervorrichtung zur Dosierung pulverförmiger Substanzen weist eine Halteeinheit, mindestens eine Aufnahmeeinheit und mindestens einen Aktuator auf. In die Aufnahmeeinheit ist mindestens eine Dosiereinheit eingesetzt. Der Aktuator wirkt auf die mindestens eine Aufnahmeeinheit, wobei die Aufnahmeeinheit in Bezug zur Halteeinheit schwenkbar gelagert ist und durch den Aktuator wiederholende bidirektionale Schwenkbewegungen der Aufnahmeeinheit erzeugbar sind. Dabei ist zwischen der Halteeinheit und der Aufnahmeeinheit mindestens eine Verbindungseinheit angeordnet und die Aufnahmeeinheit ist um eine Schwenkachse verschwenkbar an der Verbindungseinheit gelagert und die Verbindungseinheit ist in Bezug zur Halteeinheit translatorisch verschiebbar gelagert und durch einen Aktuator sind wiederholende bidirektionale Translationen der Verbindungseinheit erzeugbar, wodurch für die Aufnahmeeinheit wiederholende bidirektionale Schwenkbewegungen und überlagernde wiederholende bidirektionale Translationen erzeugbar sind.

Die Überlagerung von Schwenkbewegung und Translation bewirkt eine überlagerte oszillierende Anregung des Gefüges des Dosiergutes, wodurch das Dosiergut gegen die Dosieröffnung getrieben wird. Das Fliessverhalten kann über die Impulsstärke und die Frequenz der Schwenkbewegung und/oder der Translation gesteuert werden.

In einer bevorzugten Ausführungsform sind die oszillierende Schwenkbewegungen der Aufnahmeeinheit und die oszillierende Translationen mit Hilfe desselben Aktuators erzeugbar. Diese Ausführungsform bietet den Vorteil, dass mit Hilfe nur eines Aktuators und somit mit nur einem Motor die Translation und die Schwenkbewegung erzeugbar sind.

Die gleichzeitige Erzeugung der Schwenkbewegung und der Translation wird vorteilhafterweise dadurch bewerkstelligt, dass mittels des Aktuators die oszillierende bzw. wiederholende bidirektionale Schwenkbewegung der Aufnahmeeinheit erzeugbar ist, und mittels dieser oszillierenden Schwenkbewegung die oszillierende bzw. wiederholende bidirektionale Translation der Verbindungseinheit erzeugbar ist.

Alternativ ist es auch möglich dass die Dosiereinrichtung mehr als einen Aktuator, insbesondere mindestens zwei Aktuatoren aufweist, wobei mittels eines ersten Aktuators die Schwenkbewegung der Aufnahmeeinheit erzeugbar ist und mittels eines zweiten Aktuators die Translation der Verbindungseinheit erzeugbar ist.

Vorteilhafterweise ist die Frequenz der wiederholenden bidirektionalen Schwenkbewegung der Aufnahmeeinheit mit der Frequenz der wiederholenden bidirektionalen Translation der Verbindungseinheit synchronisierbar. Diese Synchronisation kann auf unterschiedliche Weise realisiert werden. Eine Möglichkeit besteht in der mechanischen Kopplung der beteiligten Komponenten. Dabei wird beispielsweise mittels eines einzigen Aktuators gleichzeitig sowohl die wiederholende bidirektionale Schwenkbewegung der Aufnahmeeinheit als auch die wiederholende bidirektionale Translation der Verbindungseinheit angeregt. Auch eine Kopplung der bidirektionalen Schwenkbewegung der Aufnahmeeinheit mit der wiederholenden bidirektionalen Translation der Verbindungseinheit ist möglich.

Wird mehr als ein Aktuator eingesetzt, so kann die Synchronisation der bidirektionalen Schwenkbewegung der Aufnahmeeinheit mit der wiederholenden bidirektionalen Translation der Verbindungseinheit mittels einer elektronischen Steuerung erreicht werden. Es ist jedoch auch möglich die Aktuatoren asynchron zu betreiben. Durch die Überlagerung asynchroner Frequenzen wird eine Schwebung erzeugt, die je nach Eigenschaften des verwendeten Dosierguts dem Zusammenklumpen des Dosierguts entgegenwirkt.

Bevorzugterweise ist in Betriebsposition der Dosiervorrichtung die Verbindungseinheit im Bezug zur Halteeinheit im Wesentlichen vertikal verschiebbar gelagert. Es kann auch genügen, dass die Verschiebungsrichtung der Verbindungseinheit in Betriebsposition der Dosiervorrichtung sowohl eine horizontale als auch vertikale Komponente aufweist. Idealerweise ist dann die vertikale Komponente grösser als die horizontale Komponente der Verschiebungsrichtung. Auf diese Weise wird sichergestellt, dass die Aufnahmeeinheit eine Auf- und Abwärtsbewegung erfährt, wodurch das sich in der Aufnahmeeinheit befindliche Dosiergut ebenfalls eine Auf- und Abwärtsbewegung erfährt und das Dosiergut auf diese Weise aufgelockert wird und auf diese Weise von den Wänden an- und abgehoben wird.

Bevorzugterweise ist in Betriebsposition der Dosiervorrichtung die Schwenkachse im Wesentlichen horizontal ausgerichtet. Idealerweise bewegt sich die Auslassöffnung der Dosiereinheit in Betriebsposition auf einem mehrheitlich konstanten Radius um diese Schwenkachse. Auf diese Weise erfährt das sich vor der Auslassöffnung befindende Dosiergut eine Schwenkbewegung, was den Massenfluss verbessert.

Idealerweise ist die Verbindungseinheit mittels eines Gelenks, beispielsweise einem Dreh- oder Kugelgelenk mit der Aufnahmeeinheit verbunden.

Bevorzugterweise ist die Verbindungseinheit mittels mindestens eines Linearlagers mit der Halteeinheit verbunden ist.

In Betriebsposition der Dosiervorrichtung ist die Halteeinheit im Wesentlichen starr befestigt. Dadurch ermöglicht die Halteeinheit eine stabile Lagerung der Verbindungseinheit.

Idealerweise sind die Aufnahmeeinheit und die Verbindungseinheit mittels mindestens eines vorgespannten Federelements gekoppelt. Auf diese Weise kann eine Bewegung der Aufnahmeeinheit an die Verbindungseinheit weitergegeben werden. Das Federelement kann ausserdem eine dämpfende Wirkung bei der Übertragung der Bewegung ausüben.

In einer bevorzugten Ausführungsform weist der Aktuator eine mittels einer Schlagfeder beaufschlagbare Hammermasse auf, wobei die Schlagfeder durch einen Spannmechanismus spannbar und schlagartig freigebbar ist, die Hammermasse durch die Schlagfeder beschleunigbar ist und durch den Aufprall der Hammermasse an der Aufnahmeeinheit und/oder an mit der Aufnahmeeinheit verbundenen Teilen und/oder der Verbindungseinheit und/oder an mit der Verbindungseinheit verbundenen Teilen eine Schockwelle in der Aufnahmevorrichtung erzeugbar ist. Durch diese Schockwellen wird einem Verklumpen des Dosierguts entgegengewirkt.

Selbstverständlich sind auch andere Aktuatoren, wie beispielsweise Piezo- oder Ultraschallaktuatoren, einsetzbar.

Durch eine geeignete Wahl der verwendeten Federelemente und Schlagfedern kann die zeitliche Folge der Amplituden und die Schnelligkeit der Bewegungen beeinflusst werden und somit auf das Fliessverhalten des pulverförmigen Dosierguts zur Dosieröffnung optimiert werden.

Alle Führungselemente können rollende Elemente aufweisen. Sie können ein Elastomer aufweisen und/oder elastische Elemente wie beispielsweise Blattfedern, elastische Biegeelemente aus Metall und/oder Kunststoffen aufweisen.

Durch zusätzliche Einbauten in der Entnahmeeinheit kann ein Verstopfen des Dosierguts zusätzlich vermindert werden. Besonders vorteilhaft haben sich dabei Einbauten vor der Dosieröffnung erwiesen. Diese Einbauten können sehr unterschiedliche Formen aufweisen. Die Grundidee bei Verwendung dieser Einbauten besteht darin eine möglichst gleichmässige Druckverteilung im Dosiergut über der Dosieröffnung zu erreichen, da ein Zusammenklumpen des Dosierguts vor allem in Bereichen von grossen Druck- und/oder Geschwindigkeitsgradienten zu erwarten ist.

Die Einbauten können die Form einfacher Bleche haben. Es sind auch komplexere Formen denkbar. Mit kegelförmigen Einbauten konnte effizient dem Verstopfen des Dosierguts entgegengewirkt werden. Die Spitze des Kegels beziehungsweise des Kegelmantels ist in Betriebsposition im Wesentlichen gegen die Strömungsrichtung des Dosierguts ausgerichtet. Das Dosiergut umströmt den Kegel beziehungsweise den Kegelmantel von der Spitze her. Nach Umströmen des Kegels oder Kegelmantels fliesst das Dosiergut wieder zusammen. Durch das Umströmen des Kegels beziehungsweise des Kegelmantels werden effizient grosse Druck- und/oder Geschwindigkeitsgradienten reduziert, wodurch eine gleichmässigere Druck- und/oder Geschwindigkeitsverteilung erreicht wird.

Auch durch stromlinienförmig ausgebildete Verdrängungskörper, wie sie beispielsweise in Silos eingesetzt werden, wird erfolgreich eine gleichmässigere Druck- und/oder Geschwindigkeitsverteilung erreicht.

Die erfindungsgemässe Dosiervorrichtung wird im Folgenden anhand von Beispielen und mit Bezugnahme auf die Zeichnungen näher erläutert. Darin zeigen:
- Figur 1: einen Schnitt durch eine erste erfindungsgemässe Dosiervorrichtung mit einem Aktuator in neutraler Position;
- Figur 2: einen Schnitt durch eine zweite erfindungsgemässe Dosiervorrichtung mit zwei Aktuatoren in neutraler Position.

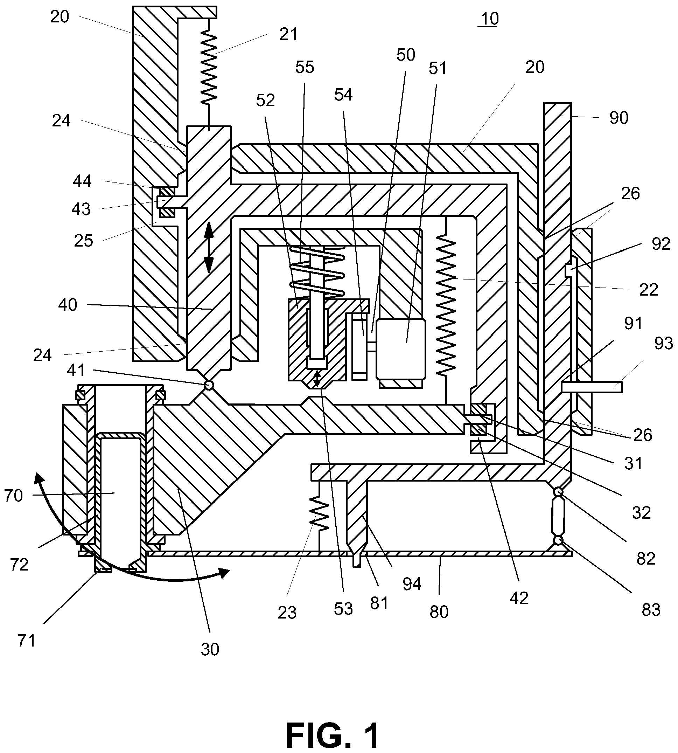

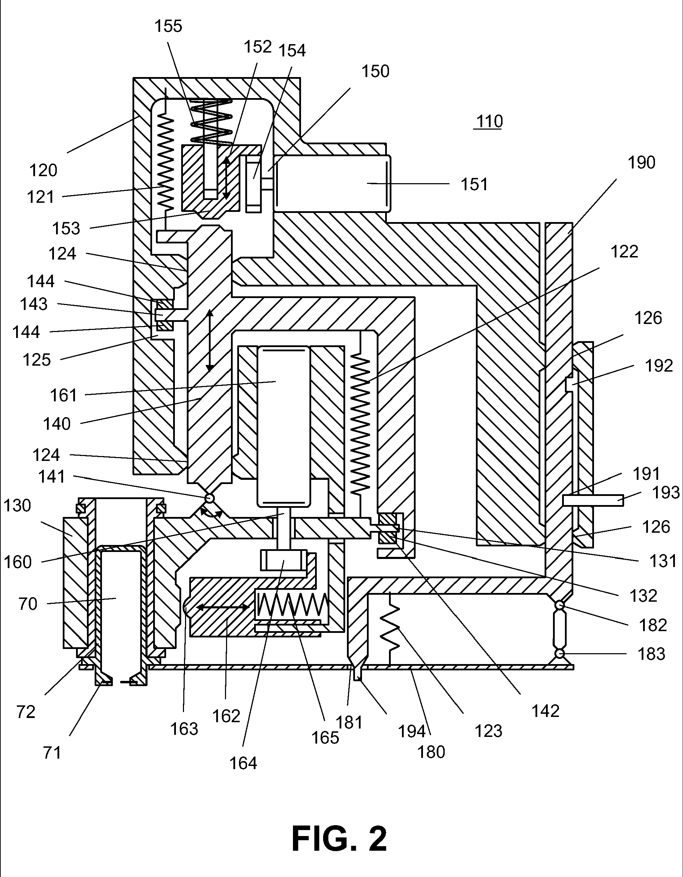

In Figur 1 ist ein Schnitt durch eine erste erfindungsgemässe Dosiervorrichtung 10 mit einem Aktuator 50 in neutraler Position dargestellt. In Figur 2 ist ein Schnitt durch eine zweite erfindungsgemässe Dosiervorrichtung 110 mit zwei Aktuatoren 150, 160 in neutraler Position dargestellt.

Die beiden erfindungsgemässen Dosiervorrichtungen 10, 110 weisen jeweils eine Halteeinheit 20, 120, eine Aufnahmeeinheit 30, 130 und eine Verbindungseinheit 40, 140 auf. Die Halteeinheit 20, 120 dient der Befestigung und Lagerung der weiteren Einheiten. Die Halteeinheit 20, 120 ist mehrheitlich unbeweglich gelagert und im Wesentlichen starr. Die Halteeinheit 20, 120 kann beispielsweise starr mit dem Gehäuse oder dem Untergrund befestigt sein. Es ist auch möglich, dass die Halteeinheit 20, 120 ein Teil des Gehäuses ist. Die Aufnahmeeinheit 30, 130 dient der Aufnahme der Entnahmeeinheit 70. Die Entnahmeeinheit 70 weist ein Entnahmegefäss 72 und einen Dosierkopf 71 auf. Das Entnahmegefäss 72 dient der Aufnahme des Dosierguts. In Betriebsposition der Dosiervorrichtung 10, 110 befindet sich das Dosiergut oberhalb des Dosierkopfs 71. Der Dosierkopf 71 ist öffenbar und schliessbar und dient dem kontrollierten Ausfliessen des Dosierguts aus dem Entnahmegefäss 72. Das Öffnen und Schliessen des Dosierkopfs 71 wird mittels einer nicht dargestellten Steuerung gesteuert. Das Dosiergut fliesst unter Schwerkrafteinfluss bei geöffnetem Dosierkopf 71 aus dem Entnahmegefäss 72 heraus. Die Entnahmeeinheit 70 kann in die Aufnahmeeinheit 30, 130 eingesetzt und aus dieser wieder entnommen werden. Das Entnahmegefäss 72 ist üblicherweise im Wesentlichen zylinderförmig und die Aufnahmeeinheit 30, 130 weist eine runde Öffnung zur Aufnahme des Entnahmegefässes 72 auf. Natürlich sind auch beliebige andere Formgebungen möglich die eine Aufnahme des Entnahmegefässes 72 in die Aufnahmeeinheit 30, 130 ermöglichen. Insbesondere ist es auch möglich dass zwischen Aufnahmeeinheit 30, 130 und Entnahmeeinheit 70 Zwischenelemente angeordnet sind.

Die Entnahmeeinheit 70 wird mittels eines Halters 80, 180 in der Aufnahmeeinheit 30, 130 gehalten. Der Halter 80, 180 ist mittels eines vorgespannten Federelements 23, 123 und über zwei Gelenke 82, 83, 182, 183 federnd an einer Halteraufnahme 90, 190 befestigt. Durch einen mit einer Aussparung 81, 181 des Halters 80, 180 zusammenwirkenden Zentrierstift 94, 194 der Halteraufnahme 90, 190 kann der Halter 80, 180 in Bezug zur Halteraufnahme 90, 190 in einer vordefinierten Position gehalten werden. Durch die Federkraft des Federelements 23, 123 wird die Entnahmeeinheit 70 entgegen der Schwerkraft in die Aufnahmeeinheit 30, 130 gedrückt. Die Halteraufnahme 90, 190 ist an der Halteeinheit 20, 120 fixiert. Die Halteraufnahme 90, 190 kann mindestens zwei Positionen einnehmen. In der Betriebsposition hält der an der Halteaufnahme 90, 190 befestigte Halter 80, 180 die Entnahmeeinheit 70 in der Aufnahmeeinheit 30, 130. In der Beschickungsposition ist der Halter 80, 180 von der Aufnahmeeinheit 30, 130 beabstandet, wodurch es genügend Platz gibt um die Entnahmeeinheit 70 in die Aufnahmeeinheit 30, 130 einzuführen beziehungsweise aus der Aufnahmeeinheit 30, 130 zu entfernen. Der Halter 80, 180 ist in Betriebsposition der Dosiervorrichtung mehrheitlich horizontal ausgerichtet.

Die Halteraufnahme 90, 190 ist über ein Linearlager 26, 126 mit der Halteeinheit 20, 120 verbunden. Die Achse des Linearlagers 26, 126 ist mehrheitlich vertikal ausgerichtet. Mittels einer ersten Nut 91, 191 der Halteraufnahme 90, 190 und einem mit der ersten Nut 91, 191 zusammenwirkenden Stift 93, 193 kann die Halteraufnahme 90, 190 in der Betriebsposition arretiert werden. Mittels einer zweiten Nut 92, 192 der Halteraufnahme 90, 190 und dem mit der zweiten Nut 92, 192 zusammenwirkenden Stift 93, 193 kann die Halteraufnahme in der Beschickungsposition arretiert werden. Selbstverständlich kann die Halteraufnahme 90, 190 auch auf andere Weise arretiert werden. Beispielsweise kann die Halteraufnahme 90, 190 mittels einer Feder-NutVerbindung an der Halteeinheit fixiert werden.

Die Halteraufnahme 90, 190 muss nicht notwendigerweise mit der Halteeinheit 20, 120 verbunden sein. Es ist auch möglich, dass die Halteraufnahme 90, 190 auf eine andere Weise befestigt wird, in welcher die Einnahme von Betriebsposition und Beschickungsposition möglich ist.

Die Verbindungseinheit 40, 140 ist mit der Halteeinheit 20, 120 verbunden. Zwischen der Verbindungseinheit 40, 140 und der Halteeinheit 20, 120 ist ein Linearlager 24, 124 angeordnet, das eine vertikale Verschiebung der Verbindungseinheit 40, 140 zu der im Wesentlichen starr gelagerten Halteeinheit 20, 120 ermöglicht. Zur Begrenzung der vertikalen Bewegung der Verbindungseinheit 40, 140 weist die Halteeinheit 20, 120 eine Anschlagsnut 25, 125 auf, die mit einem Vorsprung 43, 143 der Verbindungseinheit 40, 140 zusammenwirkt. In Betriebsposition der Dosiervorrichtung 10, 110 ist der Vorsprung 43, 143 im Wesentlichen in horizontaler Richtung ausgerichtet. Zwischen dem Vorsprung 43, 143 und der Anschlagsnut 25, 125 können Dämpfungselemente 44, 144 angeordnet sein. Die Dämpfungselemente 44, 144 können aus einem flexiblen Material wie beispielsweise Gummi oder einem Kunststoff gefertigt sein.

Es ist natürlich auch möglich, die Begrenzung der vertikalen Bewegung auf andere Weise zu realisieren. Insbesondere ist es möglich die Verbindungseinheit 40, 140 mit einer Nut zu versehen, die mit einem Vorsprung der Halteeinheit 20, 120 zusammenwirkt. Prinzipiell ist der Einsatz von jeglicher Art geeignet gewählter Anschläge möglich.

Durch ein zwischen der Halteeinheit 20, 120 und der Verbindungseinheit 40, 140 angeordnetes erstes Federelement 21, 121 wird die Verbindungseinheit 40, 140 in einer vordefinierten neutralen Position gehalten. Das erste Federelement 21, 121 ist in der vordefinierten neutralen Position vorgespannt und zieht die Verbindungseinheit 40, 140 in Betriebsposition der Dosiervorrichtung 10, 110 in vertikaler Richtung gegen die Anschlagsnut 25, 125.

Die Verbindungseinheit 40, 140 ist mit der Aufnahmeeinheit 30, 130 verbunden. Zwischen der Verbindungseinheit 40, 140 und der Aufnahmeeinheit 30, 130 ist ein Drehgelenk 41, 141 angeordnet, das eine radiale Bewegung der Aufnahmeeinheit 30, 130 zu der im Wesentlichen vertikal verschiebbar gelagerten Verbindungseinheit 40, 140 ermöglicht. Zur Ermöglichung der Schwenkbewegung können zwischen der Aufnahmeeinheit 30, 130 und der Verbindungseinheit 40, 140 auch alternative Verbindungselemente eingesetzt werden. Insbesondere ist der Einsatz von Radiallagern und elastischen Kreuzgelenken möglich.

Zur Begrenzung der radialen Bewegung der Aufnahmeeinheit 30, 130 weist die Verbindungseinheit 40, 140 eine Anschlagsnut 42, 142 auf, die mit einem Vorsprung 31, 131 der Aufnahmeeinheit 30, 130 zusammenwirkt. In Betriebsposition der Dosiervorrichtung 10, 110 ist der Vorsprung 31, 131 im Wesentlichen in horizontaler Richtung ausgerichtet. Zwischen dem Vorsprung 31, 131 und der Anschlagsnut 42, 142 können Dämpfungselemente 32, 132 angeordnet sein.

Es ist natürlich auch möglich, die Begrenzung der radialen Bewegung auf andere Weise zu realisieren. Insbesondere ist es möglich die Verbindungseinheit 40, 140 mit einem Vorsprung zu versehen, der mit einer Nut der Aufnahmeeinheit 30, 130 zusammenwirkt. Prinzipiell ist der Einsatz von jeglicher Art geeignet gewählter Anschläge möglich.

Durch ein zwischen der Verbindungseinheit 40, 140 und der Aufnahmeeinheit 30, 130 angeordnetes zweites Federelement 22, 122 wird die Aufnahmeeinheit 30, 130 in einer vordefinierten neutralen Position gehalten. Das zweite Federelement 22, 122 ist in der vordefinierten neutralen Position vorgespannt und zieht die Aufnahmeeinheit 30, 130 in Betriebsposition der Dosiervorrichtung 10, 110 in vertikaler Richtung gegen die Anschlagsnut 42, 142.

Durch die radiale Bewegung der Aufnahmeeinheit 30, 130 kann die sich in der Aufnahmeeinheit 30, 130 befindende Entnahmeeinheit 70, 170 eine Wippbewegung erfahren. Durch diese Wippbewegung wird der Fluss des Dosierguts im Dosierkopf begünstigt.

Durch die axiale Bewegung der Verbindungseinheit 40, 140 kann die sich in der Aufnahmeeinheit 30, 130 befindende Entnahmeeinheit 70, 170 eine Auf- und Abwärtsbewegung erfahren. Durch diese Auf- und Abwärtsbewegung wird der Fluss des Dosierguts im Dosierkopf begünstigt.

Es hat sich gezeigt, dass durch eine Kombination von Wippbewegungen mit der Auf- und Abwärtsbewegungen der Fluss des Dosierguts im Dosierkopf begünstigt wird.

Die Wippbewegungen und Auf- und Abwärtsbewegungen werden durch geeignete Aktuatoren 50, 150, 160 erzeugt. Es hat sich gezeigt, dass impulsförmige Stösse am besten dem Verstopfen des Dosierguts entgegenwirkten.

Bei der in Figur 1 dargestellten Dosiervorrichtung 10 wird für die Erzeugung der Wippbewegung und der Auf- und Abwärtsbewegung ein einziger Aktuator 50 verwendet. Mittels des Aktuators 50 werden Schläge auf die Aufnahmeeinheit 30 gebracht. Durch diese Schläge wird eine Wippbewegung der Aufnahmeeinheit 30 herbeigeführt. Durch die Wippbewegungen der Aufnahmeeinheit 30 wird eine Auf- und Abwärtsbewegung der Verbindungseinheit 40 herbeigeführt.

Bei der in Figur 2 dargestellten Dosiervorrichtung 110 werden für die Erzeugung der Wippbewegung und der Auf- und Abwärtsbewegung zwei Aktuatoren 150, 160 verwendet. Mittels des Aktuators 150 werden Schläge auf die Aufnahmeeinheit 130 gebracht. Durch diese Schläge wird eine Wippbewegung der Aufnahmeeinheit 130 herbeigeführt. Mittels des zusätzlichen Aktuators werden Schläge auf die Verbindungseinheit 140 gebracht. Durch diese Schläge wird eine Auf- und Abwärtsbewegung der Verbindungseinheit 140 herbeigeführt.

Die Aktuatoren 50, 150, 160 der beiden Ausführungsformen weisen einen Antrieb 51, 151, 161 auf. Der Antrieb 51, 151, 161 kann beispielsweise ein Elektromotor sein. Der Antrieb 51, 151, 161 dreht einen Translator 54, 154, 164, der die Drehbewegung des Motors in eine Linearbewegung umwandelt. Der Translator 54, 154, 164 kann beispielsweise ein Excenter, eine Nockenwelle, ein Kronenrad und/oder ein Kurvengetriebe aufweisen. Bei der Verwendung einer Nockenwelle mit angeschrägten Nocken konnten gute Ergebnisse erzielt werden, da damit ein schneller Impulsstoss erzeugt werden konnte. Durch den Translator 54, 154, 164 wird eine Hammermasse 52, 152, 162 in eine Linearbewegung versetzt. Die Hammermasse 52, 152, 162 ist linear verschiebbar gelagert. An die Hammermasse 52, 152, 162 ist ein Stempel 53, 153, 163 angeformt, mit dessen Hilfe ein Schlag auf die Aufnahmeeinheit 30, 130 und/oder auf die Verbindungseinheit 40, 140 ausführbar ist. Um die Aufnahmeeinheit 30, 130 in eine Wippbewegung zu versetzen muss der Schlag in Bezug zum Gelenk 41, 141 in axialer Richtung erfolgen. Je grösser der Abstand des Schlags vom Gelenk 41, 141 ist, desto grösser ist die Hebelwirkung. Der Schlagimpuls kann zusätzlich durch eine Schlagfeder 55, 155, 165 verstärkt werden. Die Schlagfeder 55, 155, 165 ist mittels eines Spannmechanismus spannbar und schlagartig freigebbar. Bei der Freigabe wird die Hammermasse 52, 152, 162 durch die Schlagfeder 55, 155, 156 beschleunigt und erzeugt durch den Aufprall der Hammermasse 52, 152, 162 an der Aufnahmevorrichtung 30, 130 und/oder der Verbindungseinheit 40, 140 eine Schockwelle. Diese Schockwelle wirkt dem Verstopfen des Dosierguts in der Entnahmeeinheit 70 entgegen.

### Bezugszeichenliste

- 110, 10: Dosiervorrichtung
- 120, 20: Halteeinheit
- 121, 21: Erstes Federelement
- 122, 22: Zweites Federelement
- 123, 23: Drittes Federelement
- 124, 24: Linearlager
- 125, 25: Anschlagsnut für die Verbindungseinheit
- 126, 26: Linearlager der Halteraufnahme
- 130, 30: Aufnahmeeinheit
- 131,31: Vorsprung
- 132, 32: Dämpfungselement
- 140, 40: Verbindungseinheit
- 141, 41: Gelenk
- 142, 42: Anschlagsnut für die Aufnahmeeinheit
- 143, 43: Vorsprung
- 144, 44: Dämpfungselement
- 150, 50: Aktuator
- 151, 51: Antrieb
- 152, 52: Hammermasse
- 153, 53: Stempel
- 154, 54: Translator
- 155, 55: Schlagfeder
- 160: Zusätzlicher Aktuator
- 161: Zusätzlicher Antrieb
- 162: Zusätzliche Hammermasse
- 163: Zusätzlicher Stempel
- 164: Zusätzlicher Translator
- 165: Zusätzliche Schlagfeder
- 70: Entnahmeeinheit
- 71: Dosierkopf
- 72: Entnahmegefäss
- 180, 80: Halter
- 181, 81: Aussparung
- 182, 82: Erstes Gelenk des Halters
- 183, 83: Zweites Gelenk des Halters
- 190, 90: Halteraufnahme
- 191, 91: Erste Nut in der Halteraufnahme
- 192, 92: Zweite Nut in der Halteraufnahme
- 193, 93: Stift
- 194, 94: Zentrierstift

## Patentansprüche

1. Dosiervorrichtung (110, 10) zur Dosierung pulverförmiger Substanzen, die eine Halteeinheit (120, 20) und mindestens eine Aufnahmeeinheit (130, 30) aufweist, in welcher Aufnahmeeinheit (130, 30) mindestens eine Entnahmeeinheit (70) eingesetzt ist und mit mindestens einem auf die Aufnahmeeinheit (130,30) wirkenden Aktuator (150, 50), wobei die Aufnahmeeinheit (130, 30) in Bezug zur Halteeinheit (120, 20) schwenkbar gelagert ist und durch den Aktuator (150, 50) wiederholende bidirektionale Schwenkbewegungen der Aufnahmeeinheit (130, 30) erzeugbar sind **dadurch gekennzeichnet, dass** die Entnahmeeinheit (70) ein Entnahmegefäss (72) und einen Dosierkopf (71) aufweist, wobei der Dosierkopf (71) öffenbar und schliessbar ist und damit einem kontrollierten Ausfliessen des Dosierguts aus dem Entnahmegefäss (72) dient, wobei zwischen der Halteeinheit (120, 20) und der Aufnahmeeinheit (130, 30) mindestens eine Verbindungseinheit (140, 40) angeordnet ist und die Aufnahmeeinheit (130, 30) um eine Schwenkachse radial verschwenkbar an der Verbindungseinheit (140, 40) gelagert ist und die Verbindungseinheit (140, 40) in Bezug zur Halteeinheit (120, 20) translatorisch verschiebbar gelagert ist und durch einen Aktuator (50, 160) wiederholende bidirektionale Translationen der Verbindungseinheit (140, 40) erzeugbar sind, wodurch für die Aufnahmeeinheit (130, 30) wiederholende bidirektionale Schwenkbewegungen und überlagernde wiederholende bidirektionale Translationen erzeugbar sind.

2. Dosiervorrichtung (10) nach Anspruch 1, **dadurch gekennzeichnet, dass** mittels des selben Aktuators (50) die oszillierende Schwenkbewegung der Aufnahmeeinheit (30) und die oszillierende Translation der Verbindungseinheit (140) erzeugbar sind.

3. Dosiervorrichtung (10) nach Anspruch 2, **dadurch gekennzeichnet, dass** mittels des Aktuators (50) die wiederholende bidirektionale Schwenkbewegung der Aufnahmeeinheit (30) erzeugbar ist und mittels dieser wiederholenden bidirektionalen Schwenkbewegung der Aufnahmeeinheit (30) die wiederholende bidirektionale Translation der Verbindungseinheit (140) erzeugbar ist.

4. Dosiervorrichtung (110) nach Anspruch 1, **dadurch gekennzeichnet, dass** die Dosiervorrichtung (110) einen ersten Aktuator (160) und einen zweiten Aktuator (150) aufweist, wobei mittels des ersten Aktuators (160) die Schwenkbewegung der Aufnahmeeinheit (30) erzeugbar ist und mittels des zweiten Aktuators (150) die Translation der Verbindungseinheit (140) erzeugbar ist.

5. Dosiervorrichtung (110, 10) nach einem der vorangehenden Ansprüche, **dadurch gekennzeichnet, dass** die Frequenz der wiederholenden bidirektionalen Schwenkbewegung der Aufnahmeeinheit (130, 30) mit der Frequenz der wiederholenden bidirektionalen Translation der Verbindungseinheit (140, 40) synchronisierbar ist.

6. Dosiervorrichtung (110, 10) nach einem der vorangehenden Ansprüche, **dadurch gekennzeichnet, dass** die Frequenz der wiederholenden bidirektionalen Schwenkbewegung der Aufnahmeeinheit (130, 30) mit der Frequenz der wiederholenden bidirektionalen Translation der Verbindungseinheit (140, 40) mittels einer elektronischen Steuerung steuerbar ist.

7. Dosiervorrichtung (110, 10) nach einem der vorangehenden Ansprüche, **dadurch gekennzeichnet, dass** in Betriebsposition der Dosiervorrichtung (210, 110, 10) die Verbindungseinheit (140, 40) in Bezug zur Halteeinheit (120, 20) im Wesentlichen vertikal verschiebbar gelagert ist.

8. Dosiervorrichtung (110, 10) nach einem der vorangehenden Ansprüche, **dadurch gekennzeichnet, dass** in Betriebsposition der Dosiervorrichtung (210, 110, 10) die Verbindungseinheit (140, 40) in Bezug zur Halteeinheit (120, 20) in Verschiebungsrichtung verschiebbar gelagert ist und die Verschiebungsrichtung eine vertikale Komponente aufweist.

9. Dosiervorrichtung (110, 10) nach einem der vorangehenden Ansprüche, **dadurch gekennzeichnet, dass** in Betriebsposition der Dosiervorrichtung (110, 10) die Schwenkachse im Wesentlichen horizontal ausgerichtet ist.

10. Dosiervorrichtung (110, 10) nach einem der vorangehenden Ansprüche, **dadurch gekennzeichnet, dass** die Verbindungseinheit (140, 40) mittels eines Drehgelenks (141, 41) mit der Aufnahmeeinheit (130, 30) verbunden ist.

11. Dosiervorrichtung (110, 10) nach einem der vorangehenden Ansprüche, **dadurch gekennzeichnet, dass** die Verbindungseinheit (140, 40) mittels mindestens eines Linearlagers (124, 24) mit der Halteeinheit (20, 120) verbunden ist.

12. Dosiervorrichtung (110, 10) nach einem der vorangehenden Ansprüche, **dadurch gekennzeichnet, dass** in Betriebsposition der Dosiervorrichtung (210, 110, 10) die Halteeinheit (120, 20) im Wesentlichen starr befestigt ist.

13. Dosiervorrichtung (110, 10) nach einem der vorangehenden Ansprüche, **dadurch gekennzeichnet, dass** die Aufnahmeeinheit (130, 30) und die Verbindungseinheit (140, 40) mittels mindestens eines vorgespannten Federelements (122, 22) gekoppelt sind.

14. Dosiervorrichtung (110, 10) nach einem der vorangehenden Ansprüche, **dadurch gekennzeichnet, dass** mindestens ein Aktuator (150, 160, 50) eine mittels einer Schlagfeder (155, 165, 55) beaufschlagbare Hammermasse (152, 162, 52) aufweist, wobei die Schlagfeder (155, 165, 55) durch einen Spannmechanismus spannbar und schlagartig freigebbar ist, die Hammermasse (152, 162, 52) durch die Schlagfeder (155, 165, 55) beschleunigbar ist und durch den Aufprall der Hammermasse (152, 162, 52) an der Aufnahmeeinheit (130, 30) und/oder an mit der Aufnahmeeinheit (130, 30) verbundenen Teilen und/oder der Verbindungseinheit (140, 40) und/oder an mit der Verbindungseinheit (140, 40) verbundenen Teilen eine Schockwelle in der Aufnahmevorrichtung (130) erzeugbar ist.

15. Verfahren zum Dosieren mit Hilfe einer Dosiervorrichtung (110, 10) nach einem der vorangehenden Ansprüche.

## Claims

1. Dosage-dispensing device (110, 10) which serves to dispense measured quantities of powdery substances, comprising a base unit (120, 20) and at least one receiving unit (130, 30), wherein at least one source unit (70) is installed in the receiving unit (130, 30), and further comprising at least one actuator (150, 50) acting on the receiving unit (130, 30), wherein the receiving unit (130, 30) is pivotally mounted with rotational mobility relative to the base unit (120, 20) and the actuator is designed to generate repeated bidirectional pivoting movements of the receiving unit (130, 30), **characterized in that** the source unit (70) comprises a source container (72) and a dispensing head (71), wherein the dispensing head (71) is designed so that it can be opened and closed and thus serves to control the outflow of dosage material from source container (72), wherein at least one connector unit (140, 40) is arranged between the base unit (120, 20) and the receiving unit (130, 30), wherein the receiving unit (130, 30) is pivotally supported on the connector unit (140, 40) with rotational mobility about a pivoting axis, wherein the connector unit (140, 40) is slidably supported with translatory mobility relative to the base unit (120, 20), and wherein the actuator (50, 160) is designed to generate repeated bidirectional translatory movements of the connector unit (140, 40), whereby the receiving unit (130, 30) can be subjected to repeated bidirectional pivoting movements and, superimposed on the latter, repeated bidirectional translatory movements.

2. Dosage-dispensing device (10) according to claim 1, **characterized in that** the oscillating pivoting movement of the receiving unit (30) and the oscillating translatory movement of the connector unit (140) can be generated by one and the same actuator (50).

3. Dosage-dispensing device (10) according to claim 2, **characterized in that** the repeated bidirectional pivoting movement of the receiving unit (30) can be generated by means of the actuator (50), and that the repeated bidirectional translatory movement of the connector unit (140) can be generated by means of the repeated bidirectional pivoting movement of the receiving unit (30).

4. Dosage-dispensing device (110) according to claim 1, **characterized in that** the dosage-dispensing device (110) comprises a first actuator (160) and a second actuator (150), wherein the oscillating pivoting movement of the receiving unit (30) can be generated by means of the first actuator (160), and the translatory movement of the connector unit (140) can be generated by means of the second actuator (150).

5. Dosage-dispensing device (110, 10) according to one of the preceding claims, **characterized in that** the frequency of the repeated bidirectional pivoting movement of the receiving unit (130, 30) can be synchronized with the frequency of the repeated bidirectional translatory movement of the connector unit (140, 40).

6. Dosage-dispensing device (110, 10) according to one of the preceding claims, **characterized in that** the frequency of the repeated bidirectional pivoting movement of the receiving unit (130, 30) can be controlled with the frequency of the repeated bidirectional translatory movement of the connector unit (140, 40) by means of an electronic control device.

7. Dosage-dispensing device (110, 10) according to one of the preceding claims, **characterized in that,** when the dosage-dispensing device (210, 110, 10) is in its operating position, the connector unit (140, 40) is supported with essentially vertical mobility relative to the base unit (120, 20).

8. Dosage-dispensing device (110, 10) according to one of the preceding claims, **characterized in that,** when the dosage-dispensing device (210, 110, 10) is in its operating position, the connector unit (140, 40) is supported with the freedom to move in a displacement direction, and that said displacement direction has a vertical component.

9. Dosage-dispensing device (110, 10) according to one of the preceding claims, **characterized in that,** when the dosage-dispensing device (110, 10) is in its operating position, the orientation of the pivot axis is essentially horizontal.

10. Dosage-dispensing device (110, 10) according to one of the preceding claims, **characterized in that** the connector unit (140, 40)) is connected to the receiving unit (130, 30) by means of a rotary pivoting joint (141, 41).

11. Dosage-dispensing device (110, 10) according to one of the preceding claims, **characterized in that** the connector unit (140, 40) is connected to the base unit (120, 20) by means of at least one linear bearing (124, 24).

12. Dosage-dispensing device (110, 10) according to one of the preceding claims, **characterized in that,** when the dosage-dispensing device (210, 110, 10) is in its operating position, the base unit (120, 20) is in essence rigidly fastened.

13. Dosage-dispensing device (110, 10) according to one of the preceding claims, **characterized in that** the receiving unit (130, 30) and the connector unit (140, 40) are coupled to each other by means of at least one pre-tensioned spring element (122, 22).

14. Dosage-dispensing device (110, 10) according to one of the preceding claims, **characterized in that** at least one actuator (150, 160, 50) comprises a hammer mass (152, 162, 52) designed to be propelled by an impact spring (155, 165, 55), wherein said impact spring (155, 165, 55) can be cocked with a tensioning mechanism and instantaneously released, so that the hammer mass (152, 162, 52) can be accelerated by the impact spring (155, 165, 55) and the impact of the hammer mass (152, 162, 52) on the receiving unit (130, 30) and/or on parts connected to the receiving unit (130, 30) and/or on the connector (140, 40) unit and/or on parts connected to the connector unit (140, 40) generates a shock wave in the receiving device (130).

15. Method of dispensing measured quantities by means of a dosage-dispensing device (110, 10) according to one of the preceding claims.

## Revendications

1. Dispositif de dosage (110, 10) pour le dosage de substances sous forme de poudre, qui présente une unité de maintien (120, 20) et au moins une unité de réception (130, 30), dans laquelle unité de réception (130, 30) au moins une unité de prélèvement (70) est insérée et avec au moins un actionneur (150, 50) agissant sur l'unité de réception (130, 30), dans lequel l'unité de réception (130, 30) est logée de manière pivotante par rapport à l'unité de maintien (120, 20) et des mouvements de pivotement bidirectionnels répétitifs de l'unité de réception (130, 30) peuvent être générés par l'actionneur (150, 50), **caractérisé en ce que** l'unité de prélèvement (70) présente un récipient de prélèvement (72) et une tête de dosage (71), dans lequel la tête de dosage (71) peut être ouverte et fermée et sert ainsi à un écoulement contrôlé du produit à doser du récipient de prélèvement (72), dans lequel au moins une unité de raccordement (140, 40) est agencée entre l'unité de maintien (120, 20) et l'unité de réception (130, 30) et l'unité de réception (130, 30) est logée au niveau de l'unité de raccordement (140, 40) de manière radialement pivotante autour d'un axe de pivotement et l'unité de raccordement (140, 40) est logée de façon déplaçable en translation par rapport à l'unité de maintien (120, 20) et des translations bidirectionnelles répétitives de l'unité de raccordement (140, 40) peuvent être générées par l'actionneur (50, 160), moyennant quoi des mouvements de pivotement bidirectionnels répétitifs et des translations bidirectionnelles répétitives chevauchantes peuvent être générées pour l'unité de réception (130, 30).

2. Dispositif de dosage (10) selon la revendication 1, **caractérisé en ce que** le mouvement de pivotement oscillant de l'unité de réception (30) et la translation oscillante de l'unité de raccordement (140) peuvent être générés au moyen du même actionneur (50).

3. Dispositif de dosage (10) selon la revendication 2, **caractérisé en ce que** le mouvement de pivotement bidirectionnel répétitif de l'unité de réception (30) peut être généré au moyen de l'actionneur (50) et la translation bidirectionnelle répétitive de l'unité de raccordement (140) peut être générée au moyen de ce mouvement de pivotement bidirectionnel répétitif de l'unité de réception (30).

4. Dispositif de dosage (110) selon la revendication 1, **caractérisé en ce que** le dispositif de dosage (110) présente un premier actionneur (160) et un second actionneur (150), dans lequel le mouvement de pivotement de l'unité de réception (30) peut être généré au moyen du premier actionneur (160) et la translation de l'unité de raccordement (140) peut être générée au moyen du second actionneur (150).

5. Dispositif de dosage (110, 10) selon l'une quelconque des revendications précédentes, **caractérisé en ce que** la fréquence du mouvement de pivotement bidirectionnel répétitif de l'unité de réception (130, 30) peut être synchronisée avec la fréquence de la translation bidirectionnelle répétitive de l'unité de raccordement (140, 40) .

6. Dispositif de dosage (110, 10) selon l'une quelconque des revendications précédentes, **caractérisé en ce que** la fréquence du mouvement de pivotement bidirectionnel répétitif de l'unité de réception (130, 30) peut être commandée avec la fréquence de la translation bidirectionnelle répétitive de l'unité de raccordement (140, 40) au moyen d'une commande électronique.

7. Dispositif de dosage (110, 10) selon l'une quelconque des revendications précédentes, **caractérisé en ce que** dans la position de fonctionnement du dispositif de dosage (210, 110, 10), l'unité de raccordement (140, 40) est logée de façon déplaçable de manière sensiblement verticale par rapport à l'unité de maintien (120, 20).

8. Dispositif de dosage (110, 10) selon l'une quelconque des revendications précédentes, **caractérisé en ce que** dans la position de fonctionnement du dispositif de dosage (210, 110, 10), l'unité de raccordement (140, 40) est logée de façon déplaçable dans la direction de déplacement par rapport à l'unité de maintien (120, 20) et la direction de déplacement présente une composante verticale.

9. Dispositif de dosage (110, 10) selon l'une quelconque des revendications précédentes, **caractérisé en ce que** dans la position de fonctionnement du dispositif de dosage (110, 10), l'axe de pivotement est orienté de manière sensiblement horizontale.

10. Dispositif de dosage (110, 10) selon l'une quelconque des revendications précédentes, **caractérisé en ce que** l'unité de raccordement (140, 40) est reliée à l'unité de réception (130, 30) au moyen d'une articulation tournante (141, 41).

11. Dispositif de dosage (110, 10) selon l'une quelconque des revendications précédentes, **caractérisé en ce que** l'unité de raccordement (140, 40) est reliée à l'unité de maintien (20, 120) au moyen d'au moins un palier linéaire (124, 24).

12. Dispositif de dosage (110, 10) selon l'une quelconque des revendications précédentes, **caractérisé en ce que** dans la position de fonctionnement du dispositif de dosage (210, 110, 10), l'unité de maintien (120, 20) est fixée de manière sensiblement rigide.

13. Dispositif de dosage (110, 10) selon l'une quelconque des revendications précédentes, **caractérisé en ce que** l'unité de réception (130, 30) et l'unité de raccordement (140, 40) sont couplées au moyen d'au moins un élément ressort précontraint (122, 22).

14. Dispositif de dosage (110, 10) selon l'une quelconque des revendications précédentes, **caractérisé en ce qu'au** moins un actionneur (150, 160, 50) présente une masse marteau (152, 162, 52) pouvant être sollicitée au moyen d'un ressort de percussion (155, 165, 55), dans lequel le ressort de percussion (155, 165, 55) peut être serré par un mécanisme de serrage et libéré soudainement, la masse marteau (152, 162, 52) peut être accélérée par le ressort de percussion (155, 165, 55) et une onde de choc peut être générée dans le dispositif de réception (130) par l'impact de la masse marteau (152, 162, 52) au niveau de l'unité de réception (130, 30) et/ou au niveau de pièces reliées à l'unité de réception (130, 30) et/ou au niveau de l'unité de raccordement (140, 40) et/ou au niveau de pièces reliées à l'unité de raccordement (140, 40).

15. Procédé de dosage à l'aide d'un dispositif de dosage (110, 10) selon l'une quelconque des revendications précédentes.
